# EUROPÄISCHE PATENTANMELDUNG

(11) **EP 3 460 206 A1**
(43) Veröffentlichungstag der Anmeldung: **27.03.2019**
(21) Anmeldenummer: 17192398.0
(22) Anmeldetag: 21.09.2017
(51) Int. Cl.: F01K 13/02

(54) **VERFAHREN ZUM BETREIBEN EINER DAMPFTURBINE**

(71) Anmelder: Siemens Aktiengesellschaft, 80333 München (DE)
(72) Erfinder: Kowalski, Matthias, 45478 Mülheim an der Ruhr (DE); Sievert, Roland, 47199 Duisburg (DE)

(57) **Zusammenfassung**

Die Erfindung betrifft ein Verfahren zum Betreiben einer Dampfturbine, wobei der Druck des Kühlmediums im Generator nicht nur zur Kühlung verändert wird, sondern zur Erhöhung oder Verringerung des Drehmoments des Generators auf die Dampfturbine, was im Hinblick auf den Anfahr- bzw. Abfahrvorgang ausgenutzt wird.

## Beschreibung

Die Erfindung betrifft ein Verfahren zum Betreiben einer Dampfturbine, wobei die Dampfturbine einen drehbar gelagerten Dampfturbinen-Rotor und ein um den Dampfturbinen-Rotor angeordnetes Gehäuse aufweist, wobei der Rotor drehmomenttechnisch mit einem Generator-Rotor eines elektrischen Generators gekoppelt wird, wobei der Generator mit einem Kühlmedium, insbesondere Luft, gekühlt wird, wobei ein Kühl-Druck des Kühlmediums im Generator eingestellt wird, wobei der Generator-Rotor ein Drehmoment auf den Dampfturbinen-Rotor ausübt.

Des Weiteren betrifft die Erfindung eine Automatisierungseinheit zum Betreiben eines solchen Verfahrens.

Dampfturbinen werden beispielsweise in Dampfkraftwerken oder Gas- und Dampfturbinenkraftwerken eingesetzt und haben vorwiegend die Aufgabe, thermische Energie in mechanische Energie umzuwandeln, um den Rotor einer elektrodynamischen Maschine, insbesondere elektrischen Generator anzutreiben. Dabei wird ein heißer Dampf mit einer vergleichsweise hohen thermischen Energie über Einströmbereiche in die Dampfturbine geführt, wobei sich der Dampf auf einem Strömungsweg innerhalb der Dampfturbine thermisch entspannt und dabei abkühlt, wodurch sich die thermische Energie in eine Rotationsenergie des Dampfturbinen-Rotors umwandelt. Im Dauerbetrieb sind die Bauteile der Dampfturbine und des elektrischen Generators in einem thermischen Ausgleichszustand. Allerdings sind Betriebszustände erforderlich, die ein Abfahren der Dampfturbine und wiederum ein Anfahren der Dampfturbine erfordern.

Das An- und Abfahren einer Dampfturbine ist durch mehrere Herausforderungen charakterisiert. Beim Anfahren einer Dampfturbine wird diese lediglich von einem vergleichsweise geringen Dampfmassenstrom durchströmt. Die Folge ist, dass die verfügbare Dampfmenge nicht ausreicht, um die Endstufe ausreichend homogen zu durchströmen, dadurch das radiale Druckgefälle eine nabenseitige Ablöseneigung begünstigt. Es kann nun vorkommen, dass durch die Drehbewegung des Dampfturbinenrotors, durch die Rückströmung und durch die resultierende Reibleistung der Schaufeln der Dampf erhitzt. Dies hat zur Folge, dass die Endstufenschaufeln sich kontinuierlich erwärmen. Dabei kann es vorkommen, dass die Temperaturen unzulässige Werte erreichen und dadurch die Verfügbarkeit der Dampfkraftanlage einschränkt.

Eine weitere Herausforderung ist, dass in einem Hochdruck-Teil der Dampfturbine die Expansion bei einer Netztrennung nur sehr geringe Leistung erzeugt. Anderenfalls würde die Dampfkraftanlage in eine so genannte Überdrehzahl gehen, was sich durch eine erhöhte Drehzahl des Dampfturbinenrotors bemerkbar macht. Dabei sind sehr hohe Temperaturen am Austritt der Hochdruck-Teil-Turbine nicht zu vermeiden und können bei einem so genannten Heißstart gegebenenfalls zu einer Abschaltung führen. Durch Bereitstellung von Bremsleistung im Strang, der durch den Dampfturbinen-Rotor und den Roter des elektrischen Generators gebildet ist, kann die Hochdruck-Teil-Turbine ein höheres Druckgefälle erhalten mit einem entsprechenden Temperaturabbau, ohne dass dabei die Drehzahl über die Nennfrequenz ansteigt, wobei der Generator dabei keine elektrische Leistung abgibt.

Beim Abfahren hilft die vorgeschlagene zusätzliche Bremsleistung, da die Drehzahlsperrbereiche (Gefahr der Resonanz von Bauteilen wie z. B. Schaufeln) insbesondere bei tief abgestimmten Endstufen schnell durchlaufen werden.

Eine weitere Herausforderung liegt darin, dass die Dampfturbine, insbesondere vor und im ersten Expansionsabschnitt durch einen erhöhten Druck bzw. die dazugehörige Kondensationstemperatur schneller durchwärmt wird, was die Verfügbarkeit der Anlage erhöht.

Wünschenswert wäre es, die vorgenannten Probleme zu beseitigen.

Aufgabe der Erfindung ist es daher, ein Verfahren zum Betreiben einer Dampfturbine anzugeben, bei dem der Anfahr- und Abfahrprozess verbessert wird.

Gelöst wird diese Aufgabe durch ein Verfahren zum Betreiben einer Dampfturbine, wobei die Dampfturbine einen drehbar gelagerten Dampfturbinen-Rotor und einen um den Dampfturbinen-Rotor angeordnetes Gehäuse aufweist, wobei der Rotor drehmomenttechnisch mit einem Generator-Rotor eines elektrischen Generators gekoppelt wird, wobei der Generator mit einem Kühlmedium, insbesondere Luft, gekühlt wird, wobei ein KühlDruck des Kühlmediums im Generator eingestellt wird, wobei der Generator-Rotor ein Drehmoment auf den Dampfturbinen-Rotor ausübt, wobei das Drehmoment vom Generator-Rotor auf den Dampfturbinen-Rotor mittels einer Änderung des Kühlmedium-Drucks verändert wird. Des Weiteren wird die Aufgabe gelöst durch eine Automatisierungseinheit zum Betreiben eines solchen Verfahrens.

Die Erfindung schlägt vor, den an eine Dampfturbine drehmomenttechnisch gekoppelten Generator als Bremse zu nutzen. Dabei wird der Generator im Betrieb mit Luft gekühlt. Eine Erhöhung des Luftdrucks im Generator führt zu erhöhten Gasreibungsverlusten durch Oberflächenreibung, Lüfterleistung und Förderwirkung des Rotors bzw. Radiallüfters. Somit kann das vom elektrischen Generator-Rotor übertragene Drehmoment auf den Dampfturbinen-Rotor durch Einstellen des Drucks der Kühlluft verändert werden. Dieser Zusammenhang wird ausgenutzt, um das Verfahren zum Betreiben einer Dampfturbine, insbesondere beim An- und Abfahren optimal auszunutzen.

Ein Vorteil der Erfindung ist, dass durch diese zusätzliche Möglichkeit in Form von Wärme im Generator umzuwandeln, statt in Turbinendrehzahl, mehr Dampfmassenstrom durch die Dampfturbine geleitet werden kann bzw. ein höherer Dampfdruck eingestellt werden kann, ohne eine Überdrehzahl einzuleiten.

Beispielsweise kann die Bremsleistung eines Generators aufgrund der Gasreibung sich von ca. 1 Megawatt auf 2 Megawatt steigern, wenn der Luftdruck der Kühlluft von einem bar auf 2 bar gesteigert wird. Dadurch würde sich die Bremsleistung von beispielsweise 1,5 Megawatt auf 2,5 Megawatt erhöhen. Solch eine Erhöhung der Bremsleistung könnte zu einer möglichen Massenstromerhöhung von ca. 66 %, bezogen auf den vergleichbaren Anfahrvorgang führen.

Mit der Erfindung wurde erkannt, dass die erzeugte zusätzliche Reibleistung im Generator zu einer Enthalpie-Erhöhung des Kühlgases im Generator führt. Dabei wird die Temperatur nicht gesteigert; die Wärmekapazität nimmt mit der steigenden Luftdichte entsprechend zu. Die Wärmeenergie wird in Gaskühlern des Generators abgekühlt, wobei dadurch im Generator ein geschlossener Gaskühlkreislauf vorliegt, oder im offenen Kühlkreislauf an die Umgebung abgeführt.

Ein Vorteil der Erfindung ist, dass bestehende Anlagen lediglich umgerüstet bzw. angepasst werden müssen, um die erfindungsgemäßen Wirkungen zu erreichen.

Mit der Erfindung wird somit eine Regelung vorgeschlagen, welche zusätzlich am An- und/oder Abfahrprozess der Dampfturbine den Generatorgasdruck mit Hinblick auf die Dampfturbine einstellt. Die Anlagenverfügbarkeit lässt sich dadurch steigern. Des Weiteren wird vorteilhafterweise eine Verminderung der Ventilation an den Dampfturbinen-Endstufen erreicht, was zu einer Lebensdauerverbrauchminimierung führt.

Des Weiteren wird vorteilhafterweise die Hochdruck-Abdampftemperatur der Dampfturbine aktiv beeinflusst, was zu einer Verfügbarkeitserhöhung führt. Dadurch kann beispielsweise die so genannte kalte Zwischenüberhitzerleitung kostengünstiger ausgeführt werden. Des Weiteren könnte man bei einem Einsatz des erfindungsgemäßen Verfahrens auf Anfahrleitungen verzichten.

Ein wesentlicher Vorteil der Erfindung ist, dass eine Schaufelermüdung beim Durchlaufen der Drehzahlsperrbereiche minimiert wird. Das führt zu einer wesentlichen Verlängerung der Lebensdauer der Dampfturbinenschaufeln.

Ebenso ist es vorteilhaft, dass durch die Erhöhung der Kondensationstemperatur beim Anwärmen ein schnelleres Anfahren der Dampfturbine möglich ist.

Die oben genannten Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels erläutert.

Eine Dampfkraftanlage oder eine Gas- und Dampfturbinenanlage weist in der Regel eine Dampfturbine auf, die eine Hochdruck-Teilturbine, eine Mitteldruck-Teilturbine und eine Niederdruck-Teilturbine umfasst. In einem Dampferzeuger wird Dampf erzeugt, der über eine Frischdampfleitung zur Hochdruck-Teilturbine geführt wird. Der aus der Hochdruck-Teilturbine ausströmende Dampf ist entsprechend abgekühlt und weist einen niedrigeren Druck auf. Dieser abgekühlte Dampf wird über eine kalte Zwischenüberhitzerleitung zu einem Zwischenüberhitzer geführt und dort wieder auf eine höhere Temperatur erwärmt. Anschließend gelangt der zwischenüberhitzte Dampf über die heiße Zwischenüberhitzerleitung zu der Mitteldruck-Teilturbine und strömt anschließend aus der Mitteldruck-Teilturbine zur Niederdruck-Teilturbine und von dort unmittelbar in einen Kondensator, wo der Dampf zu Wasser kondensiert und über Pumpen entsprechend wieder zum Dampferzeuger geführt wird. Damit ist der Kreislauf geschlossen. beim Anfahrvorgang müssen die Bauteile entsprechend erwärmt werden, was eine gewisse Zeit erfordert. Die Dampfturbine weist einen Dampfturbinen-Rotor auf, der drehbar gelagert ist, wobei um den Dampfturbinen-Rotor ein Gehäuse angeordnet ist. Der Dampfturbinen-Rotor ist mit einem Generator-Rotor drehmomenttechnisch gekoppelt. Das bedeutet, dass das von der Dampfturbine erzeugte Drehmoment des Dampfturbinen-Rotors ein Drehmoment auf den Generator-Rotor ausübt.

Der elektrische Generator weist einen drehbar gelagerten Generator-Rotor auf, auf dem eine Läuferwicklung angeordnet ist. Durch die Läuferwicklung fließt ein vergleichsweise hoher elektrischer Strom, mit dem ein Magnetfeld erzeugt wird, das durch die Drehung ein wechselndes Magnetfeld in eine Statorwicklung eines im Generatorgehäuse befindliche Ständerwicklung führt. In die Ständerwicklung wird eine elektrische Spannung induziert. Durch die vergleichsweise hohen Ströme in der Läuferwicklung als auch in der Statorwicklung, müssen diese gekühlt werden. Eine Wicklung wird beispielsweise mit Luft gekühlt. Der Luftdruck hat hierbei einen Einfluss auf die Kühlleistung und auf das Drehmoment des Generator-Rotors, da durch eine Erhöhung des Luftdrucks sich die Gasreibung erhöht, was zu Gasreibungsverlusten führt und dadurch zu erhöhten negativen Drehmomenten. Die Statorwicklung kann beispielsweise ebenfalls mit Luft oder mit Stickstoff oder mit Wasser gekühlt werden. Der Kühldruck des Kühlmediums, hier Kühlluft, kann eingestellt werden. Durch eine Automatisierungseinheit kann der Kühl-Druck derart eingestellt werden, dass das Drehmoment vom Generator-Rotor auf den Dampfturbinen-Rotor verändert wird, was insbesondere beim An- und/oder Abfahrvorgang ausgenutzt wird. Beispielsweise kann beim Anfahrvorgang eine Druckerhöhung zu einem vergrößerten negativen Drehmoment des Generatorrotors auf den Dampfturbinen-rotor führen, was zu einer Anhebung der Drücke bzw. Massenströme in der Dampfturbine ohne Überdrehzahl genutzt werden kann.

Die Erhöhung des Drucks des Kühlmediums, hier Luft in elektrischen Generatoren, wurde bisher allein für die Kühlung eingesetzt. Mit der Automatisierungseinheit wird nun eine Regelung realisiert, welche zusätzlich am An- und/oder Abfahrprozess der Dampfturbine den Generatorgasdruck mit Hinblick auf die gewünschte Last der Dampfturbine einstellt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben einer Dampfturbine,
wobei die Dampfturbine einen
drehbar gelagerten Dampfturbinen-Rotor und einen um den Dampfturbinen-Rotor angeordnetes Gehäuse aufweist, wobei der Rotor drehmomenttechnisch mit einem Generator-Rotor eines elektrischen Generators gekoppelt wird,
wobei der Generator mit einem Kühlmedium, insbesondere Luft gekühlt wird, wobei ein Kühl-Druck des Kühlmediums im Generator eingestellt wird,
wobei der Generator-Rotor ein Drehmoment auf den Dampfturbinen-Rotor ausübt,
**dadurch gekennzeichnet, dass**
das Drehmoment vom Generator-Rotor auf den Dampfturbinen-Rotor mittels einer Änderung des Kühl-Drucks verändert wird.

2. Verfahren nach Anspruch 1,
wobei eine Erhöhung des Kühl-Drucks zu einer Vergrößerung des Drehmoments vom Generator-Rotor auf den Dampfturbinen-Rotor führt.

3. Verfahren nach Anspruch 1,
wobei eine Erniedrigung des Kühl-Drucks zu einer Verringerung des Drehmoments vom Generator-Rotor auf den Dampfturbinen-Rotor führt.

4. Verfahren nach Anspruch 1, 2 oder 3,
wobei der Kühl-Druck während eines Anfahrvorgangs der Dampfturbine verändert wird.

5. Verfahren nach Anspruch 1, 2 oder 3,
wobei der Kühl-Druck während des Abfahrvorgangs der Dampfturbine verändert wird.

6. Verfahren nach Anspruch 1, 2 oder 3,
wobei ein Automatisierungssystem zum Regeln des Kühl-Drucks derart ausgebildet wird, dass eine Erhöhung des Drucks und/oder des Massenstroms des Dampfes in die Dampfturbine innerhalb bestimmter Grenzen erfolgt.

7. Verfahren nach Anspruch 6,
wobei das Automatisierungssystem ferner derart ausgebildet ist, dass eine Veränderung, insbesondere Verringerung des Massenstroms des Dampfes in die Dampfturbine innerhalb bestimmter Grenzen erfolgt.

8. Verfahren nach Anspruch 7,
wobei die Veränderung des Massenstromes in Abhängigkeit der durch den Generator bereitgestellten Bremslast erfolgt.

9. Automatisierungseinheit zum Betreiben eines Verfahrens nach einem der Ansprüche 1 bis 7.
